# EUROPÄISCHE PATENTSCHRIFT

(11) **EP 0 690 086 B1**
(45) Veröffentlichungstag und Bekanntmachung des Hinweises auf die Patenterteilung: **17.11.1999**
(21) Anmeldenummer: 95109927.4
(22) Anmeldetag: 26.06.1995
(51) Int. Cl.: C08G 61/02, C09K 11/06, H05B 33/14

(54) **Konjugierte Polymere mit Ansateilstrukturen und ihre Verwendung als Elektrolumineszenzmaterialien**
Conjugated polymers with ansa partial structures and their use as electroluminescent materials
Polymères conjugués à structures partielles ansa et leur utilisation comme matériaux électroluminescents

(30) Priorität: 30.06.1994 DE 4422670
(43) Veröffentlichungstag der Anmeldung: 03.01.1996
(73) Patentinhaber: Aventis Research & Technologies GmbH & Co. KG, 65926 Frankfurt am Main (DE)
(72) Erfinder: Stern, Roland, Dr., D-65189 Wiesbaden (DE); Lupo, Donald, Dr., D-60316 Frankfurt (DE); Salbeck, Josef, Dr., D-65779 Kelkheim (DE); Schenk, Hermann, Dr., D-65719 Hofheim (DE); Stehlin, Thomas, Dr., D-65830 Kriftel (DE); Müllen, Klaus, Prof., D-55128 Mainz (DE); Scherf, Ullrich, Dr., D-55252 Mainz-Kastel (DE); Huber, Joachim, Dr., D-55218 Ingelheim (DE)

(56) Entgegenhaltungen:
- ADVANCED MATERIALS, Bd. 6, Nr. 6, 1.Juni 1994, Seite 518 XP000444084 "Ladder Polymers"
- NATURE, Bd. 368, 28.April 1994, Seiten 831-834, XP002000779 A.SCHLÜTER ET AL.: "Synthesis of a fully unsaturated all-carbon ladder polymer"
- MAKROMOLEKULARE CHEMIE, MACROMOLECULAR SYMPOSIA, Bd. 77, 1994, Seiten 359-368, XP002000780 M. LÖFFLER ET AL.: "Structurally Perfect Ladder Polymers: Shape and Conversion"
- MAKROMOLEKULARE CHEMIE, MACROMOLECULAR SYMPOSIA, Bd. 54 / 55, 1.Februar 1992, Seiten 465-476, XP000259329 U. FAHNENSTICH ET AL: "DESIGN OF NOVEL STRUCTURALLY DEFINED LADDER-TYPE POLYMERS"
- MAKROMOLEKULARE CHEMIE, MACROMOLECULAR CHEMISTRY AND PHYSICS, Bd. 193, Nr. 5, 1.Mai 1992, Seiten 1127-1133, XP000267994 U. SCHERF ET AL.: "POLYARYLENES AND POLY(ARYLENEVINYLENE)S, 9 THE OXIDIZED STATES OF A (1,4-PHENYLENE) LADDER POLYMER"
- MACROMOLECULAR RAPID COMMUNICATIONS, Bd. 15, Nr. 11, 1.November 1994, Seiten 897-902, XP000474298 J. HUBER ET AL.: "A SOLUBLE POLY-PARA-PHENYLENE0 COMPOSED OF CYCLOPHANE UNITS: POLY 2,5-(OXYDECANOXY)-1,4-PHENYLENE"

## Beschreibung

Es besteht ein hoher industrieller Bedarf an großflächigen Festkörper-Lichtquellen für eine Reihe von Anwendungen, überwiegend im Bereich von Anzeigeelementen, der Bildschirmtechnologie und der Beleuchtungstechnik. Die an diese Lichtquellen gestellten Anforderungen können zur Zeit von keiner der bestehenden Technologien völlig befriedigend gelöst werden.

Als Alternative zu herkömmlichen Anzeige- und Beleuchtungselementen, wie Glühlampen, Gasentladungslampen und nicht selbstleuchtenden Flüssigkristallanzeigeelementen, sind bereits seit einiger Zeit Elektrolumineszenz(EL)materialien und -vorrichtungen, wie lichtemittierende Dioden (LED), in Gebrauch.

Neben anorganischen sind seit etwa 30 Jahren auch niedermolekulare organische Elektrolumineszenzmaterialien und -vorrichtungen bekannt (siehe z.B. US-A- 3,172,862). Bis vor kurzem waren aber solche Vorrichtungen in ihrer praktischen Verwendbarkeit stark eingeschränkt.

In WO 90/13148 und EP-A 0 443 861 sind Elektrolumineszenzvorrichtungen beschrieben, die einen Film aus einem konjugierten Polymer als lichtemittierende Schicht (Halbleiterschicht) enthalten. Solche Vorrichtungen bieten zahlreiche Vorteile wie die Möglichkeit, großflächige, flexible Displays einfach und kostengünstig herzustellen. Im Gegensatz zu Flüssigkristalldisplays sind Elektrolumineszenzdisplays selbstleuchtend und benötigen daher keine zusätzliche rückwärtige Beleuchtungsquelle.

Eine typische Vorrichtung nach WO 90/13148 besteht aus einer lichtemittierenden Schicht in Form eines dünnen, dichten Polymerfilms (Halbleiterschicht), der wenigstens ein konjugiertes Polymer enthält. Eine erste Kontaktschicht steht in Kontakt mit einer ersten Oberfläche, eine zweite Kontaktschicht mit einer weiteren Oberfläche der Halbleiterschicht. Der Polymerfilm der Halbleiterschicht hat eine genügend geringe Konzentration von extrinsischen Ladungsträgern, so daß beim Anlegen eines elektrischen Feldes zwischen den beiden Kontaktschichten Ladungsträger in die Halbleiterschicht eingebracht werden, wobei die eine Kontaktschicht positiv gegenüber der anderen wird, und die Halbleiterschicht Strahlung aussendet. Die in solchen Vorrichtungen verwendeten Polymere sind konjugiert. Unter konjugiertem Polymer versteht man ein Polymer, das ein delokalisiertes Elektronensystem entlang der Hauptkette besitzt. Das delokalisierte Elektronensystem verleiht dem Polymer Halbleitereigenschaften und gibt ihm die Möglichkeit, positive und/oder negative Ladungsträger mit hoher Mobilität zu transportieren.

In WO 90/13148 wird als polymeres Material für die lichtemittierende Schicht Poly(p-phenylenvinylen) verwendet, und es wird vorgeschlagen, die Phenylgruppe in einem solchen Material durch ein heterocyclisches oder ein kondensiertes carbocyclisches Ringsystem zu ersetzen. Um die Verarbeitbarkeit solcher Polymere zu erhöhen, wurden bereits Derivate mit Alkyl- oder Alkoxyseitenketten dargestellt (siehe z.B. EP-A 0 442 861 und US-51 89 136), die eine erhöhte Löslichkeit aufweisen.

Obwohl mit diesen Materialien gute Ergebnisse erzielt wurden, ist beispielsweise die Farbreinheit noch unbefriedigend. Weiterhin ist es mit den bisher bekannten Polymeren kaum möglich, eine blaue oder weiße Emission zu erzeugen.

Da zudem die Entwicklung von Elektrolumineszenzmaterialien, insbesondere auf Grundlage von Polymeren, noch in keiner Weise als abgeschlossen betrachtet werden kann, sind die Hersteller von Beleuchtungs- und Anzeigevorrichtungen an den unterschiedlichsten Elektrolumineszenzmaterialien für solche Vorrichtungen interessiert.

Dies liegt unter anderem auch daran, weil erst das Zusammenwirken der Elektrolumineszenzmaterialien mit den weiteren Bauteilen der Vorrichtungen Rückschlüsse auf die Eignung des Elektrolumineszenzmaterials zuläßt.

Aufgabe der vorliegenden Erfindung war es daher, neue Elektrolumineszenzmaterialien bereitzustellen, die bei Verwendung in Beleuchtungs oder Anzeigevorrichtung geeignet sind, das Eigenschaftsprofil dieser Vorrichtungen zu verbessern.

Während niedermolekulare Ansaverbindungen bekannt und in der Literatur beschrieben sind, wurden Polymere mit Ansaeinheiten bisher nur von M. Löffler, A. Schlüter und V. Enkelmann, Nature 368 (1994) 831 und M. Löffler und A. Schlüter, Macromol. Symp. 77 (1994) 359 beschrieben.

In diesem Artikel sind Ansateilstrukturen enthaltende konjugierte Polymere beschrieben, die durch Verknüpfung von Benzol- und Naphthalingruppen entstehen. Die Verknüpfung der aromatischen Gruppen ist dergestalt, daß eine aromatische Gruppe paarweise mit zwei weiteren aromatischen Gruppen verbunden ist und diese Verbindung darin besteht, daß jeweils zwei Ringatome einer aromatischen Gruppe mit jeweils zwei Ringatomen einer anderen aromatischen Gruppe direkt verknüpft sind.

Es wurde nun überraschend gefunden, daß bestimmte konjugierte Polymere, die aromatische Gruppen und Ansateilstrukturen enthalten, neben einer verbesserten Löslichkeit in organischen Solventien und verbesserten Filmbildungseigenschaften insbesondere auch gute Elektro- und Photolumineszenz mit einer hohen Farbreinheit aufweisen.

Gegenstand der Erfindung sind daher Ansateilstrukturen enthaltende konjugierte Polymere, dadurch gekennzeichnet, daß sie aromatische Gruppen enthalten und daß benachbarte aromatische Gruppen so miteinander verbunden sind, daß ein Ringatom einer aromatischen Gruppe direkt mit einem Ringatom der anderen aromatischen Gruppe verknüpft ist und etwaige weitere Verknüpfungen dieser beiden aromatischen Gruppen nur über eine Brücke möglich sind, die mindestens ein vierbindiges Kohlenstoffatom und/oder Heteroatom enthält.

Die erfindungsgemäßen Polymere mit Ansateilstrukturen sind als Elektrolumineszenzmaterialien hervorragend geeignet, da sie eine sehr hohe Farbreinheit aufweisen.

Die Verbindungen sind zur Erzielung blauer, gelber und weißer Elektrolumineszenz gut geeignet.

Weitere Vorteile der erfindungsgemäßen Polymere mit Ansateilstrukturen sind die niedrige Kristallisationstendenz und die guten Filmbildungseigenschaften der Verbindungen. Durch die Wahl entsprechender Ausgangsverbindungen können Polymere mit einheitlicher Stereochemie und gewünschter Taktizität erhalten und eingesetzt werden.

Ansateilstruktur im Sinne der Erfindung bezeichnet eine aromatische oder heteroaromatische Gruppe, die durch eine aliphatische Kette, die auch Heteroatome, Mehrfachbindungen und/oder aliphatische und/oder aromatische Ringe enthalten kann, überbrückt wird, wobei die Brückenatome nicht direkt benachbart sein dürfen.

Polymere im Sinne der Erfindung umfassen Homo-, Co-, Ter- und höhere Polymere.

Konjugiert im Sinne der Erfindung heißt voll- oder teilkonjugiert, wobei unter Konjugation eine Kette von drei oder mehr sp²-hybridisierten Kohlenstoffatomen verstanden wird.

Vorzugsweise ist die Konjugationslänge in den voll- oder teilkonjugierten Polymeren gemäß der Erfindung mindestens so groß, daß eine Emission im sichtbaren Bereich des Spektrums erfolgt.

Bevorzugt sind erfindungsgemäße Polymere, enthaltend eine oder mehrere Ansateilstrukturen der Formel (Ia) bis (Ig), 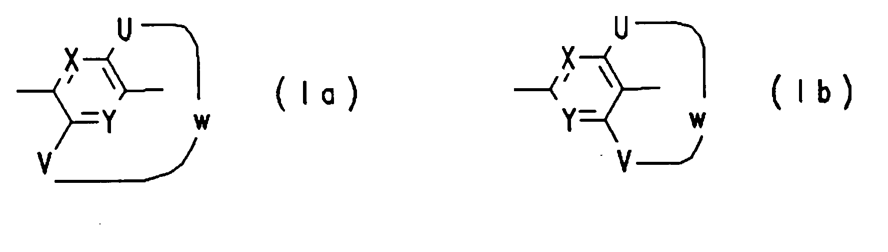 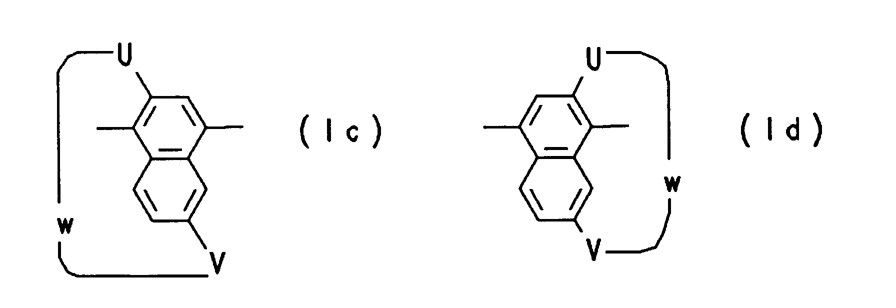 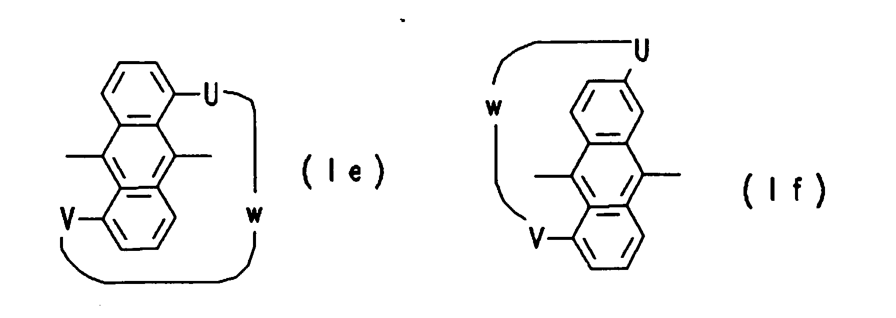 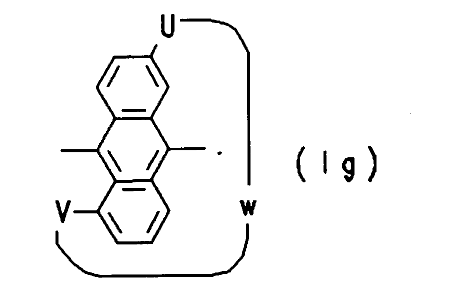 wobei die Symbole und Indizes folgende Bedeutungen haben:
- X,Y: =CR¹-, =N-;
- U,V: -O-, -S-, -NR¹-, -CR¹R²-;
- R¹,R²: H, Alkyl, Alkoxy mit jeweils 1 bis 22 Kohlenstoffatomen, CN, Halogen, Aryl, Aryloxy, mit jeweils 6 bis 10 Kohlenstoffatomen;
- W: -(CH₂)_{q}-, -(CH₂)ₙ-Z-(CH₂)ₘ-;
- Z: -CO-, -C≡C-C≡C-, -NHCO-, -S-(CH₂)ₚ-S-, -NH-, -CO(CH₂)ₚCO-, -OCO(CH₂)ₚCOO-, -NHCO(CH₂)ₚCONH-, -NH(CH₂)ₚNH-, -O(CH₂)ₚO-, -O-, 1,4-Phenylen, -S-, -SO₂-(CH₂)ₚ-SO₂-, -SO₂-, -CO-CHOH-;
- n,m,p: 0, 1, 2, .. , 20;
- q: 5 .. 20.

Besonders bevorzugt sind Polymere der Formeln (II) und/oder (III),

-[Cₘ₁-Dₘ₂]ₘ₃- (II)

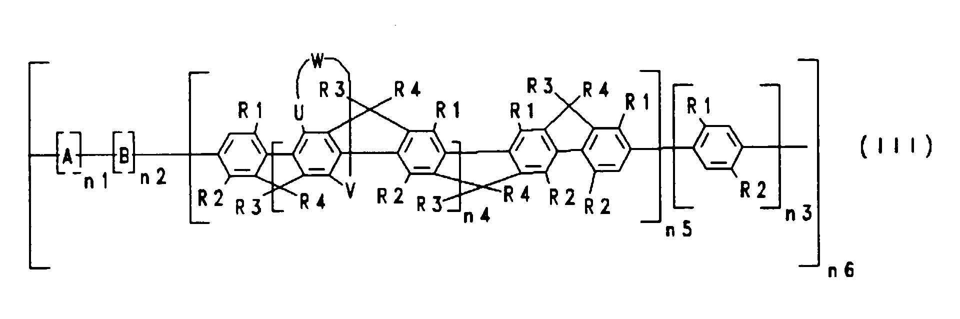

wobei die Symbole und Indizes folgende Bedeutungen haben:
- A, B, C: sind gleich oder verschiedene Bausteine der Formel (la) bis (Ig)
- D: 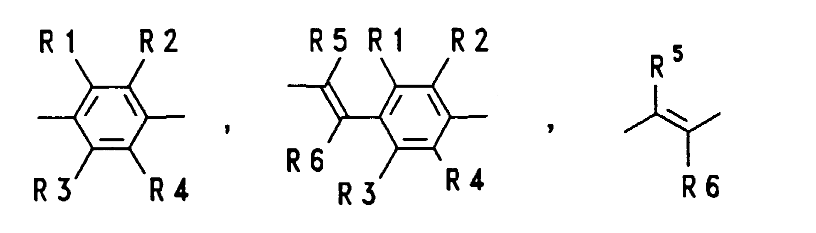
- m1,m2: 0, 1 bis 20;
- m3: 1 bis 2000;
- U,V: -O-, -S-, -NR¹-, -CR¹R²-;
- W: -(CH₂)_{q}-, -(CH₂)ₙ-Z-(CH₂)ₘ-;
- Z: -CO-, -C≡C-C≡C-, -NHCO-, -S-(CH₂)ₚ-S-, -NH-, -CO(CH₂)ₚCO-, -OCO(CH₂)ₚCOO-, -NHCO(CH₂)ₚCONH-, -NH(CH₂)ₚNH-, -O(CH₂)ₚO-, -O-, 1,4-Phenylen, -S-, -SO₂-(CH₂)ₚ-SO₂-, -SO₂-, -CO-CHOH-;
- n,m,p: 0, 1, 2, 20;
- q: 5 .. 20;
- R1,R2,R3,R4,R5,R6: H, Alkyl, Alkoxy, mit jeweils 1 bis 22 Kohlenstoffatomen, Aryl, Aryloxy, mit jeweils 6 bis 10 Kohlenstoffatomen, CN, Halogen;
- n1,n2,n3: 0,1 ... 20;
- n4,n5: 0,1 ... 2000 und
- n6: 1 ... 2000.

Beispiele für besonders bevorzugte Ansateilstrukturen sind: 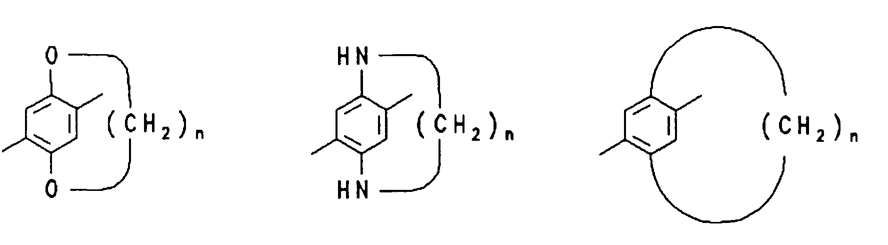 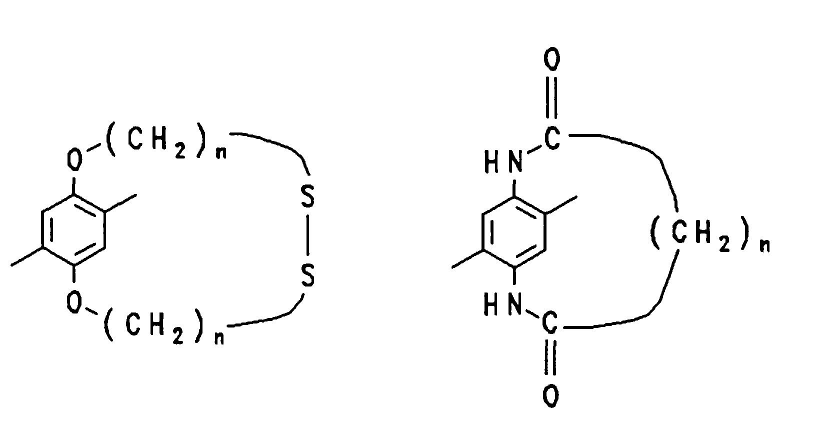 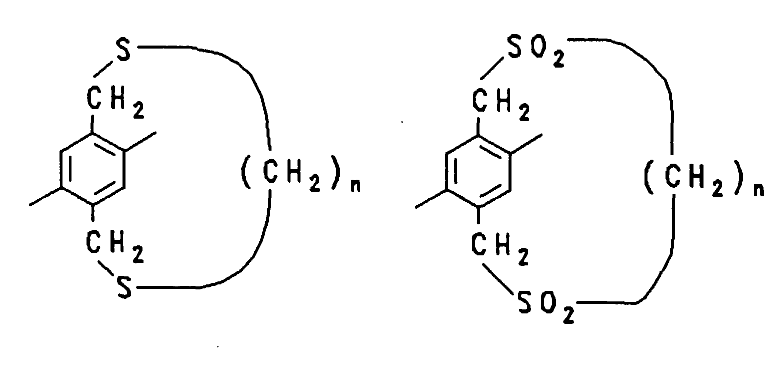 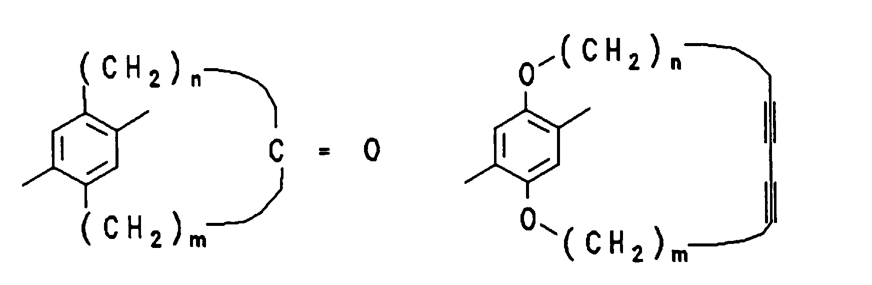 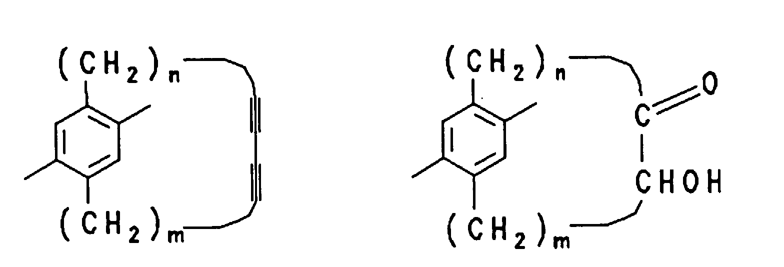 wobei n, m jeweils 0 bis 20 sind und n + m 4 bis 20 ist.

Die erfindungsgemäßen Polymere zeichnen sich unter anderem durch eine beträchtlich gesteigerte Löslichkeit in organischen Solventien bei einer gleichzeitig nur geringen Erhöhung des Moleküldurchmessers aus. Demzufolge, d.h. aufgrund ihres vergrößerten Achsenverhältnisses x (Länge/Durchmesser), zeigen derartige Moleküle häufig flüssigkristallines Verhalten.

Aufgrund der Ansateilstrukturen ergibt sich die Möglichkeit der Herstellung von Polymeren einheitlicher Stereochemie, beispielsweise durch den Einsatz optisch aktiver Monomere; darüber hinaus läßt sich häufig die Lage des Emissionsmaximums gezielt durch eine geeignete Wahl der Taktizität des Polymers steuern, d.h. batho- oder hypsochrom verschieben.

Die Herstellung der erfindungsgemäßen oder erfindungsgemäß verwendeten Verbindungen erfolgt nach an sich literaturbekannten Methoden, wie sie in Standardwerken zur Organischen Synthese, z.B. Houben-Weyl, Methoden der Organischen Chemie, Georg-Thieme-Verlag, Stuttgart und in den entsprechenden Bänden der Serie "The Chemistry of Heterocyclic Compounds" von A. Weissberger und E. C. Taylor (Herausgeber) beschrieben werden.

Die Herstellung erfolgt dabei unter Reaktionsbedingungen, die für die genannten Umsetzungen bekannt und geeignet sind. Dabei kann auch von an sich bekannten, hier nicht näher erwähnten Varianten Gebrauch gemacht werden.

Bevorzugt ist die Herstellung erfindungsgemäßer Verbindungen auf drei Routen.
1. Die erste Route beinhaltet die chemische Kupplung geeignet substituierter Ansaverbindungen zu Polymeren der erfindungsgemäßen Struktur. Dabei ist es möglich, die Ansaverbindungen entweder direkt oder mittels geeigneter Spacersegmente konjugativ zu verbinden. Als Spacersegmente kommen dabei vor allem Arylene, wie 1,4-Phenylen, 2,5-disubstituierte 1,4-Phenylen-, 1,4- und 1,5-Naphthylen, 1,4- und 9,10-Anthrylen-Bausteine (sowie die entsprechenden heteroaromatischen Analoga), in Frage, des weiteren auch mono- oder disubstituierte Vinyleneinheiten, wobei als Substituenten der Arylen- und Vinylensegemente Alkyl-, Aryl-, Alkoxy- und Aryloxy-Gruppen oder auch CN, Halogen bevorzugt sind. Die chemische Kupplung zwischen den Ansaverbindungen, direkt oder mittels der angeführten Spacergruppen, erfolgt dann über funktionelle Gruppen (wobei auch -H als funktionelle Gruppe wirken kann), mit denen die vorgeformten Ansateilstrukturen und Spacersegmente ausgestattet sind. Hierbei finden Methoden zur Aryl-Aryl- und Aryl-Olefin-Verknüpfung Anwendung. Literaturbekannte Methoden dazu sind vor allem:
   - Übergangsmetall-katalysierte Kupplungen vom HECK-Typ [siehe z.B. R.F. Heck, Org. Reactions 27 (1981) 345], YAMAMOTO-Typ [siehe z.B. T. Yamamoto, Prog. Polym. Sci. 1153], SUZUKI-Typ [siehe z.B. Miyaura, N., Yanagi, T., Suzuki, A., Synth. Commun. 11 (1981) 513] und STILLE-Typ [siehe z.B. J.K. Stille, Angew. Chem. 98 (1986) 504; Int. Ed. Engl. 25 (1986) 508], sowie andere wohlbekannte Kupplungsmethoden [siehe z.B. HOUBEN-WEYL, Methoden der Organischen Chemie, Band 5/2b "Arene, Arine", Thieme, Stuttgart, 1981].
   - Oxidative Aryl-Aryl-Kupplungen, wie die SCHOLL-Reaktion [siehe z.B. R. Scholl, C. Seer; Ann. 394 (1912) 111], oder die oxidative Kupplung elektronenreicher Heteroaromaten, wie Thiophen oder Pyrrol.
   - Carbonylolefinierungsreaktionen vom WITTIG-, HORNER-EMMONS- oder McMURRY-Typ [siehe z.B. HOUBEN-WEYL, Methoden der Organischen Chemie, Band 5/1b "Alkene, Cycloalkene, Arylalkene", Thieme, Stuttgart 1972], bzw. die reduktive Verknüpfung geeigneter Carbonylderivate (α,α'-Dihalogenverbindungen, Thioketone, Diazoketone) [siehe z.B. HOUBEN-WEYL, Methoden der Organischen Chemie, Band 5/1b "Alkene, Cycloalkene, Aralkene", Thieme, Stuttgart 1972].
2. Die zweite Route beinhaltet die Synthese geeigneter Präpolymere, die in einer anschließenden thermisch oder photolytisch induzierten Eliminierungsreaktion zu konjugierten Polymeren gemäß der Formel (II) umgesetzt werden. Derartige Routen sind in der Literatur wohlbekannt und werden z. B. für die Synthese von Poly(arylen vinylen)en, wie Poly(phenylen vinylen), eingesetzt [vergleiche z.B. US 3,706,677; US 3,532,643; F. Louwet, D. Vanderzande, J. Gelan, Synth. Met., Short Commun. 52 (1992) 125]. Der Umweg über ein lösliches Präpolymer ermöglicht hierbei die Herstellung von konjugierten Polymeren, die ansonsten aufgrund ihrer intrinsisch schlechten Löslichkeit nicht oder nur mit vergleichsweise niedrigen Molekulargewichten zugänglich sind. Zudem kann insbesondere auch die Verarbeitung von nicht unzersetzt schmelzbaren und unlöslichen konjugierten Polymeren auf der Stufe des Präpolymers erfolgen. Für die erfindungsgemäßen, Ansagruppen enthaltenden Polymere, die aufgrund ihrer besonderen Struktur und der damit verbundenen geringeren intermolekularen Wechselwirkung eine erhöhte Löslichkeit aufweisen, ist diese Route eine Alternative für die zuerst beschriebene Route. Für den Fall, daß die erfindungsgemäßen Polymere trotz der Ansagruppierungen nur schlecht löslich sind, ist die zweite Route der ersten vorzuziehen.
3. Mittels der dritten Route lassen sich Polymere gemäß Formel (III) herstellen. Hierbei wird zunächst ein geeignetes Präpolymer synthetisiert, das anschließend über eine polymeranaloge Reaktion zur gewünschten erfindungsgemäßen Struktur umgesetzt wird. Hierbei finden insbesondere Reaktionen, die zu einer Verbrückung vorhandener Monomersegmente unter Ausbildung hochkondensierter, planarer Substrukturen führen, Anwendung. Dies geschieht bevorzugt durch intramolekulare Kondensations- oder Cyclisierungsreaktionen vom FRIEDEL-CRAFTS-Typ (Alkylierung, Acylierung [vergleiche z.B. DE-A 41 11 878], Elektronentransfer-induzierte Cyclisierungsreaktionen (reduktive und oxidative Kondensation [vergleiche z.B. U. Scherf, K. Müllen; Synthesis (1992) 23]), Carbonylolefinierungsreaktionen (wie z.B. oben aufgeführt) oder mittels photochemischer Cyclisierungen (Kondensationen).

Auf diese Weise lassen sich reine Leiterpolymere [vergleiche z.B. K. Chmil, U. Scherf, Makromol. Chem., Rapid Commun. 14 (1993) 217] und Copolymere, die aus verdrillenden Spacersegmenten (A und B in Formel (III)) und Leitersegmenten aufgebaut sind (siehe WO-A 95/07955) erhalten. Im Falle der Copolymere können die Ansastrukturen sowohl in den Spacersegmenten als auch in den Leitersegmenten eingebaut werden. Dies geschieht durch Mischen geeigneter Monomere, die zumindest potentiell die späteren Strukturbestandteile repräsentieren. Die Kupplung der Monomerbausteine erfolgt hierbei beispielsweise mittels der oben aufgelisteten Methoden zur Aryl-Aryl- oder Aryl-Olefin-Kupplung. Die Copolymere weisen eine statistische Verteilung der Monomerbausteine auf.

Erfindungsgemäß finden die beschriebenen Verbindungen als Elektrolumineszenzmaterialien Verwendung, d.h., sie dienen als aktive Schicht in einer Elektrolumineszenzvorrichtung. Als aktive Schicht im Sinne der Erfindung gelten Elektrolumineszenzmaterialien, die befähigt sind bei Anlegen eines elektrischen Feldes Licht abzustrahlen (lichtemittierende Schicht), sowie Materialien, welche die Injektion und/oder den Transport der positiven und/oder negativen Ladungen verbessern (Ladungsinjektionsschichten und Ladungstransportschichten).

Gegenstand der Erfindung ist daher auch die Verwendung der erfindungsgemäßen Polymere als Elektrolumineszenzmaterialien.

Gegenstand der Erfindung ist weiterhin eine Elektrolumineszenzvorrichtung mit einer oder mehreren aktiven Schichten, die eine oder mehrere erfindungsgemäße Polymere mit Ansateilstruktur enthalten. Die aktive Schicht kann beispielsweise eine lichtemittierende Schicht und/oder eine Transportschicht und/oder eine Ladungsinjektionsschicht sein.

Der allgemeine Aufbau solcher Elektrolumineszenzvorrichtungen ist beispielsweise in US 4,539,507 und US 5,151,629 beschrieben. Polymere enthaltende Elektrolumineszenzvorrichtungen sind beispielsweise in WO 90/13148 oder EP-A 0 443 861 beschrieben.

Sie enthalten üblicherweise eine elektrolumineszierende Schicht zwischen einer Kathode und einer Anode, wobei mindestens eine der Elektroden transparent ist. Zusätzlich kann zwischen der elektrolumineszierenden Schicht und der Kathode eine Elektroneninjektions und/oder Elektronentransportschicht eingebracht sein und/oder zwischen der elektrolumineszierenden Schicht und der Anode eine Lochinjektions und/oder Lochtransportschicht eingebracht sein. Als Kathode können z.B. Ca, Mg, Al, In, Mg/Ag dienen. Als Anode können z.B. Au oder ITO (Indiumoxid/Zinnoxid auf einem transparentem Substrat, z.B. aus Glas oder einem transparenten Polymer) verwendet werden.

Im Betrieb wird die Kathode auf negatives Potential gegenüber der Anode gesetzt, dabei werden Elektronen von der Kathode in die Elektroneninjektionsschicht /Elektronentransportschicht oder direkt in die lichtemittierende Schicht injiziert. Gleichzeitig werden Löcher von der Anode in die Lochinjektionsschicht/ Lochtransportschicht oder direkt in die lichtemittierende Schicht injiziert.

Die injizierten Ladungsträger bewegen sich unter dem Einfluß der angelegten Spannung durch die aktiven Schichten aufeinander zu. Dies führt an der Grenzfläche zwischen Ladungstransportschicht und lichtemittierender Schicht oder innerhalb der lichtemittierenden Schicht zu Elektronen/Loch-Paaren, die unter Aussendung von Licht rekombinieren.
Die Farbe des emittierten Lichtes kann durch die als lichtemittierende Schicht verwendete Verbindung variiert werden.

Elektrolumineszenzvorrichtungen finden Anwendung z.B. als selbstleuchtende Anzeigeelemente, wie Kontrollampen, alphanumerische Displays, Hinweisschilder, und in optoelektronischen Kopplern.

Die Erfindung wird durch die Beispiele näher erläutert.

### Beispiele

### Beispiel 1

### Poly[15,17-(2,13-dioxabicyclo[12.2.2]-14,16,17-octadecatrien)]

15,17-Dibrom-2,13-dioxabicyclo[12.2.2]-14,16,17-octadecatrien (oder 14,17-Dibrom-1,12-dioxa[12]paracyclophan) 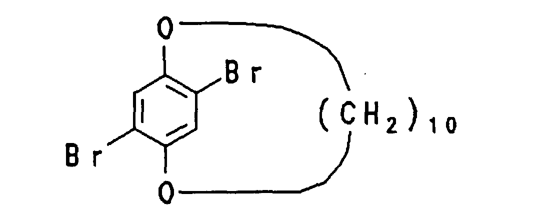 nach R.C. Fuson, H.O. House, J.Am.Chem.Soc. 75 (1953) 1327 bzw. A. Lüttringhaus, H. Gralheer, Liebigs Ann. Chem. 550 (1942) 67.

2,5-Dibromhydrochinon wurde nach Benedikt (Mon. 1 (1881) 345) durch Bromieren von Hydrochinon in heißem Eisessig gewonnen. Schmelzpunkt 185-186°C nach Umkristallisation aus SO₂-haltigem Wasser.

### 2,5-Dibromhydrochinon-mono(ω-bromdecyl)ether

Zu einer siedenden, gerührten Lösung von 164 g 2,5-Dibromhydrochinon und 345 g Decamethylenbromid in 250 ml Ethanol werden innerhalb einer Stunde 87 ml 2.65 molare methanolische Kalilauge getropft. Nach weiterem 2-stündigen Kochen bis zum Eintritt neutraler Reaktion, gießt man in 1 l heißes Wasser, schüttelt gut durch und dekantiert die wäßrige Schicht noch lauwarm ab. Zur Entfernung von überschüssigem 2,5-Dibromhydrochinon wird diese Operation noch zweimal wiederholt. Überschüssiges Decamethylenbromid wird durch Destillation bei 0.4 Torr entfernt. Der gebildete Halbether (2,5-Dibromhydrochinon-mono(ω-bromdecyl)ether) wird nach Vakuumsublimation (120 - 140°C bei 0.001 Torr) erhalten.

Zur weiteren Reinigung kann aus Petrolether und anschließend aus wäßrigem Methanol umkristallisiert werden (Ausbeute 51 %, Schmelzpunkt 67°C).

### 2,5-Dibromhydrochinon-mono(ω-bromdodecyl)ether

Herstellung in der oben beschriebenen Weise aus 280 g 1,12-Dibromdodecan und 90 g 2,5-Dibromhydrochinon in 200 ml Alkohol und 35 ml 3.06 molarer methanolischer Kalilauge.

Das überschüssige Dibromid wird bei einer 155°C nicht übersteigenden Badtemperatur und 0.05 Torr abdestilliert, der Halbether wird bei 0.001 Torr unterhalb 160°C in einer Kurzwegapparatur übergetrieben (Ausbeute 22 g). Der Halbether kann zur Reinigung aus Petrolether und aus wäßrigem Methanol umkristallisiert werden (Schmelzpunkt 71 °C).

### Cyclisierung des Halbethers

### 15,17-Dibrom-2,13-dioxabicyclo[12.2.2]-14,16,17-octadecatrien.

Eine Lösung von 30 g 2,5-Dibromhydrochinon-mono(ω-bromdecyl)ether in 500 ml Iso-Amylalkohol werden innerhalb von 42 h unter starkem Rühren zu 1 l Iso-Amylalkohol, der 35 g fein gepulvertes entwässertes Kaliumcarbonat enthält, getropft . Nach 1 stündigem Nacherhitzen, Abfiltrieren von anorganischem Material und Abdestillieren des Lösungsmittels im Vakuum wird der Rückstand mit 100 ml Diethylether extrahiert. Die Etherphase wird anschließend mit 2 n-Natronlauge und Wasser gewaschen. Nach Trocknen und Einengen der Etherphase erhält man 17 g (68 %) 15,17-Dibrom-2,13-dioxabicyclo[12.2.2]-14,16,17-octadecatrien. (Siedepunkt 167 - 168°C bei 0.1 Torr). Die Substanz kann aus Ethanol umkristallisiert werden (Schmelzpunkt 96°C).

### 2,13- Dioxabicyclo[12.2.2]-14,16,17-octadecatrien-15,17-bisboronsäure.

Zu einer Lösung von 7,00 g (17.2 mmol) 15,17-Dibromo-2,13-dioxabicyclo[12.2.2]-14,16,17-octadecatrien in 250 ml Diethylether werden bei -78°C unter Argon 26.87 ml (43 mmol) n-Butyllithium (1.6 M in Hexan) getropft. Die Reaktionsmischung wird auf Raumtemperatur erwärmt und für weitere 2 h gerührt. Danach wird die Lösung in einen Tropftrichter überführt und zu einer auf -78°C gekühlten Lösung von 27.77 ml (120 mmol) Triisopropylborat in 150 ml Diethylether getropft. Die Reaktionsmischung wird weitere 12 h bei Raumtemperatur gerührt. Nach Hydrolyse mit 200 ml 2N Salzsäure wird der erhaltene Niederschlag abfiltriert, mit 1 l kaltem Wasser gewaschen und bei 50°C / 0.01 mbar getrocknet. Ausbeute 2.79 g (48 %) 2,13- Dioxabicyclo[12.2.2]-14,16,17-octadecatrien-15,17-bisboronsäure. ¹H NMR (200 MHz, d⁶-DMSO): d 7.84 (4H), 7.36 (2H), 4.42 (2H), 4.21 (2H) 1.70 (2H), 1.52 (2H), 1.10 (4H), 0.97 (4H), 0.67 (4H). ¹³C NMR (50 MHz, d⁶-DMSO): d 157.12, 126.76, 123.28, 69.2, 27.34, 27.14, 23.73.

### Poly[15,17-(2,13-dioxabicyclo[12.2.2.]-14,16,17-octadecatrien]

Zu einer Lösung von 0.500 g (1.5 mmol) 2,13- Dioxabicyclo[12.2.2]-14,16,17-octadecatrien-15,17-bisboronsäure und 0.606 g (1.5 mmol) 15,17-Dibromo-2,13- dioxabicyclo[12.2.2]-14,16,17-octadecatrien in 20 ml THF werden 20 ml einer wäßrigen 1 M Kaliumcarbonatlösung gegeben. Die Mischung wird am Rückfluß gekocht und 26 mg Tetrakis(triphenylphosphino)palladium(0) in 5 ml THF werden zugegeben. Nach 2 tägigem Kochen am Rückfluß wird die Mischung in 200 ml Methanol gegossen. Der ausgefallene Niederschlag wird abfiltriert, mit 50 ml verdünnter Salzsäure gewaschen und in Methylenchlorid wieder gelöst. Die erhaltene Lösung wird getrocknet, eingeengt und das Polymer durch Zusatz von Methanol gefällt. Ausbeute 533 mg (48 %) Poly[15,17-(2,13-dioxabicyclo[12.2.2]-14,16,17-octadecatrien)].
¹H NMR (200 MHz, CDCl₃): d 7.27 (2H), 4.30 (2H), 4.02 (2H), 1.07 (16H). ¹³C NMR (125 MHz, CDCl₃): d 149.05, 127.96, 121.55, 70.49, 27.56, 27.50, 27.36, 24.37.

### Beispiel 2

### Leiterpolymer

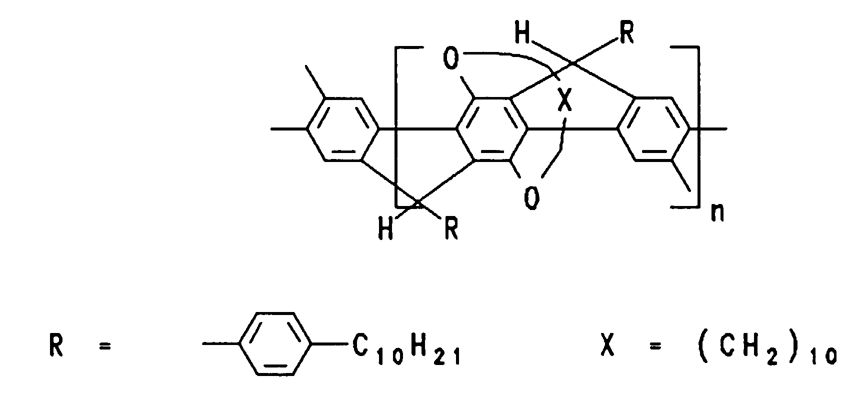

### Polyketon

Eine Lösung von 1.078 g (1.49 mmol) 2',5'-Dibrom-4-decyl-4'-(4-decylbenzoyl) benzophenon und 0.5 g (1.49 mmol) 2,13-Dioxabicyclo[12.2.2]-14,16,17-octadecatrien-15,17-bisboronsäure in 10 ml THF wird zu 10 ml einer wäßrigen 1 M Kaliumcarbonatlösung gegeben. Die Mischung wird am Rückfluß gekocht und 25 mg Tetrakis(triphenylphosphino)palladium(0) in 5 ml THF werden zugegeben. Nach 48 h Kochen am Rückfluß wir die Mischung in 100 ml Methanol gegeben. Der ausgefallene Niederschlag wird abfiltriert, mit 100 ml verdünnter Salzsäure gewaschen und mit Methylenchlorid wieder gelöst. Die erhaltene Methylenchlorid Lösung wird getrocknet, eingeengt und das Polymer durch Zusatz von Methanol gefällt. Ausbeute, 745 mg (79 %) Polyketon.
Mₙ: 22300 M_{w}: 36400 (gemäß GPC)

### Polyalkohol

Eine Lösung aus 700 mg (0.865 mmol bezogen auf Monomereinheiten) Polyketon in 70 ml Toluol werden zu einer Suspension von 245 mg (6.44 mmol) Lithiumaluminiumhydrid in 70 ml THF gegeben. Die Mischung wird 30 min bei Raumtemperatur gerührt und anschließend vorsichtig mit Ethanol, Wasser und verdünnter Salzsäure versetzt. Die organische Phase wird mit Wasser gewaschen, getrocknet und zur Trockene eingeengt. Das Polymer wird mit THF wieder gelöst und mit Wasser gefällt. Ausbeute 634 mg (91 %) Polyalkohol.

### Leiterpolymer

Eine Lösung von 500 mg (0.613 mmol) Polyalkohol in 300 ml Dichlormethan wird mit 1.8 g (12.66 mmol) Bortrifluorid-Etherat versetzt. Nach 5 min Rühren bei Raumtemperatur werden zuerst 100 ml Ethanol und anschließend 200 ml Wasser zugesetzt. Die organische Phase wird abgetrennt, mit Wasser gewaschen, getrocknet und eingeengt. Fällung in Aceton liefert das Leiterpolymer als gelbes Pulver. Ausbeute 420 mg (88 %).
Mₙ: 36200 M_{w}: 56700 (gemäß GPC)

Für die Gelpermeationschromatographie (GPC) wurden PL-Gel Säulen (drei Säulen, 10 µm gel, Porenweite 50, 10³ und 10⁴ nm) mit angekoppeltem UV/VIS-Detektor eingesetzt. Alle GPC-Analysen wurden an 1,2-Dichlorbenzollösungen der Polymere bei 70° C durchgeführt (Konzentration des Polymers 2 g/l). Die Kalibrierung erfolgte durch Polystyrol-Standards mit enger Molekulargewichtsverteilung.

### Beispiel 3

17,19-Dibrom-2,15-dioxabicyclo[14.2.2]-16,18,19-eicosatrien (oder 16,19-Dibromo-1,14-dioxa[14]paracyclophan) 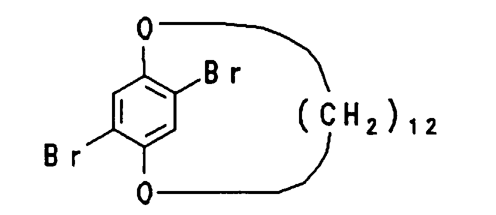 17,19-Dibrom-2,15-dioxabicyclo[14.2.2]-16,18,19-eicosatrien

20 g 2,5-Dibromhydrochinon-mono(ω-bromdodecyl)ether, hergestellt analog zu Beispiel 1, gelöst in 250 ml Amylalkohol werden innerhalb von 19 h unter starkem Rühren zu 1 l Amylalkohol, der 15 g fein gepulvertes entwässertes Kaliumcarbonat enthält, getropft. Nach 1 stündigem Nacherhitzen, Abfiltrieren von anorganischem Material und Abdestillieren des Lösungsmittels im Vakuum wird der Rückstand mit 100 ml Diethylether extrahiert. Die Etherphase wird anschließend mit 2 n-Natronlauge und Wasser gewaschen. Nach Trocknen und Einengen der Etherphase erhält man 12 g (71 %) 17,19-Dibrom-2,15-dioxabicyclo[14.2.2]-16,18,19-eicosatrien (Siedepunkt 170°C bei 0.06 Torr). Die Substanz kann aus Ethanol umkristallisiert werden (Schmelzpunkt 77-78°C).

### Beispiel 4:

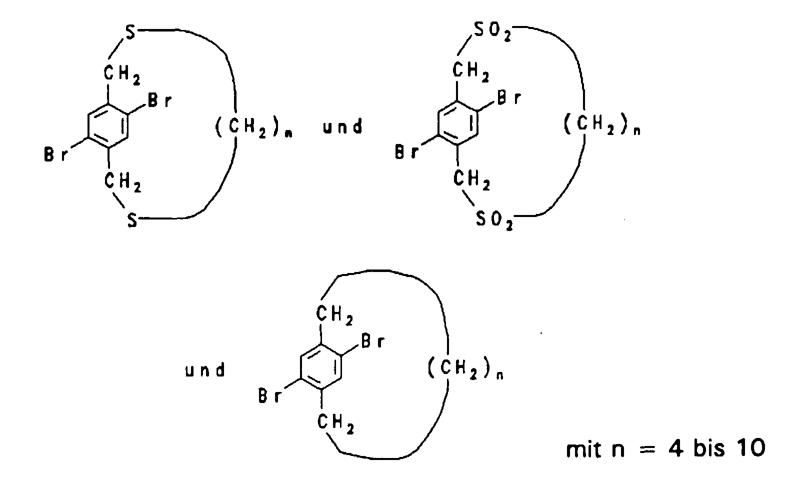

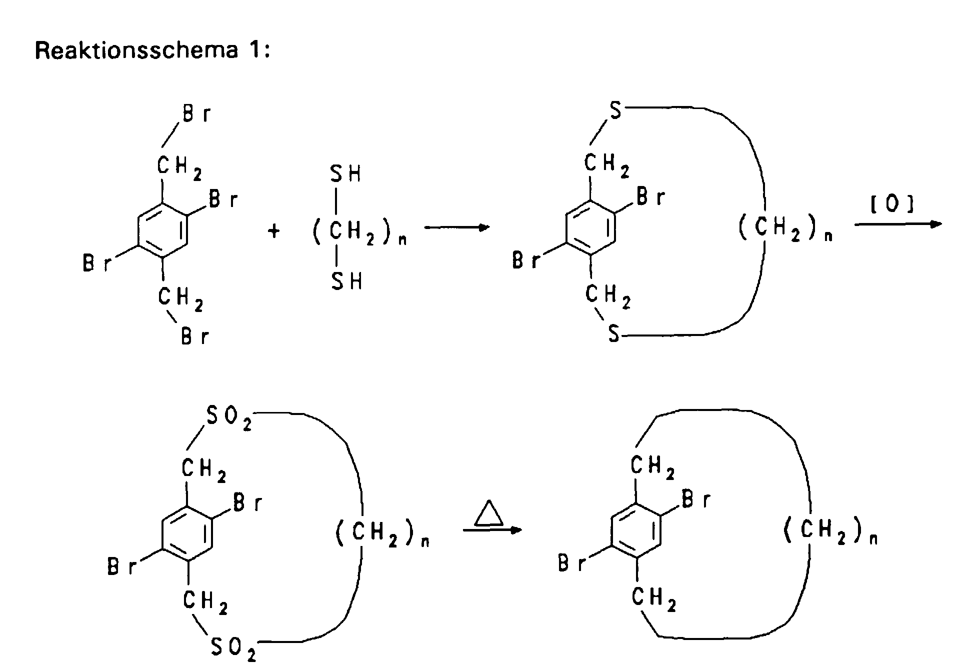

nach F. Vögtle, Chemiker Zeitung 94 (1970) 313; bzw. T. Otsubo, S. Misami, Synth. Commun. 8 (1978) 285.

### Allgemeines Verfahren zur Herstellung der Dithiacyclophane:

30 mmol 2,5-Dibrom-1,4-bis(brommethyl)benzol in 250 ml Benzol sowie 30 mmol des betreffenden ω,ω'-Dimercaptoalkans und 60 mmol NaOH in 250 ml 95 %igem Ethanol werden während 5 h gleichzeitig aus zwei Präzisionstropftrichtern in 2.2 l gerührtes, siedendes Ethanol getropft. Nach 12 stündigem Kochen wird im Vakuum zur Trockene eingedampft. Der Rückstand wird in Benzol aufgenommen und an neutralem Aluminiumoxid mit Benzol chromatographiert.

### Oxidation zu den Disulfonen:

10 mmol des Dithiacyclophans werden mit 20 ml Eisessig und 6 ml 35 %iger wäßriger Wasserstoffperoxidlösung gemischt. Die Mischung wird für 5 h auf 100°C erhitzt und dann im Eisbad abgekühlt. Die erhaltenen farblosen Kristalle werden abfiltriert, mit Wasser gewaschen und getrocknet.

### Pyrolyse zu den Paracyclophanen:

Zur Pyrolyse werden 200 mg des obigen Disulfons in ein einseitig zugeschmolzenes Pyrex-Rohr (40 x 1.0 cm) gegeben. Das andere Ende des Glasrohrs wird mit etwas Glaswolle verschlossen und an eine Pumpe angeschlossen. Das Rohr wird auf 30-50 Torr evakuiert und in einen 15 cm langen Rohrofen bei 650°C eingeschoben. Am kalten Ende kondensiert das ölige Produkt. Die Reaktion ist nach wenigen Minuten beendet. Chromatographie an Silicagel mit Pentan liefert das Paracyclophan.

### Beispiel 5:

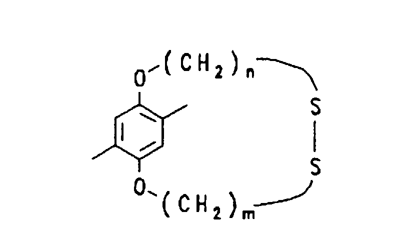

mit n = 1 - 10, m = 1 - 10 und n + m = 4 - 12 . 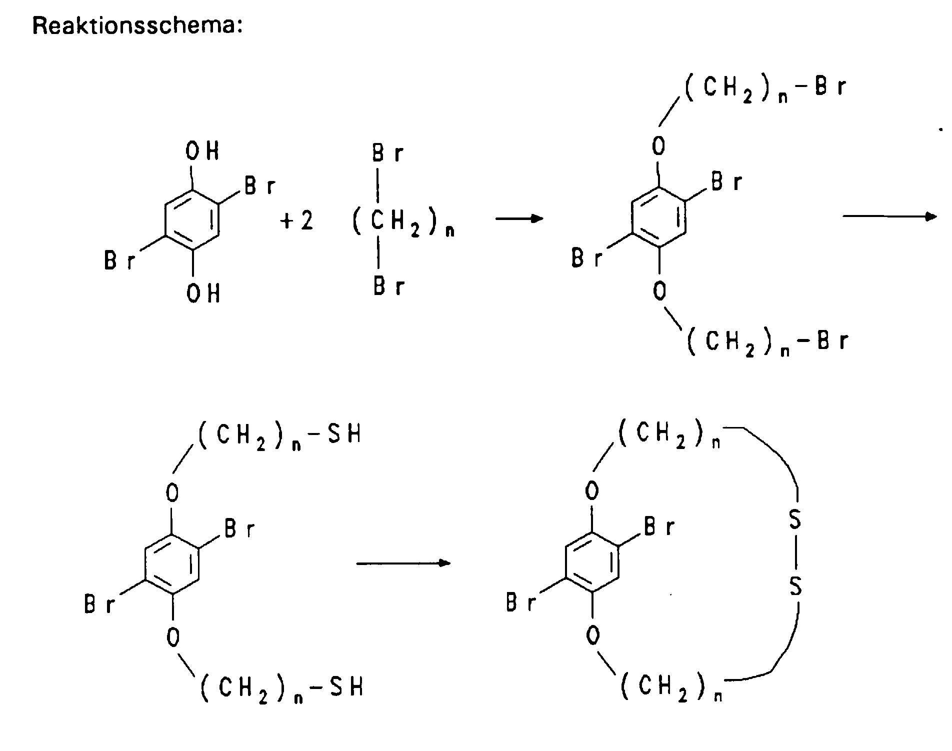 nach A. Lüttringhaus, F. Cramer, H. Prinzbach, Angew.Chem. 69 (1957) 137 oder A. Lüttringhaus, F. Cramer, H. Prinzbach, F.M. Henglein, Ann. 613 (1958) 185.

### Allgemeines Verfahren

### 2,5-Dibromhydrochinon-bis(ω-brom-1-alkyl)-ether:

50 mmol 2,5-Dibromhydrochinon und 500 mmol des betreffenden ω,ω'-Dibromalkans werden in 150 ml Ethanol vorgelegt. Bei 50°C läßt man unter Stickstoff eine Lösung von 110 mmol KOH in 30 ml 50 %igem Ethanol unter Rühren während 30 min zutropfen und kocht unter Rückfluß bis zur neutralen Reaktion. Nach Stehenlassen über Nacht wird das Produkt abgesaugt. Zur Reinigung kann aus Alkohol umkristallisiert werden (Ausbeute 80 %).

### Bis-thiuroniumsalz:

10 mmol des 2,5-Dibromhydrochinon-bis(ω-brom-1-alkyl)-ethers und 24 mmol Thioharnstoff werden in 30 ml Ethanol 12 h am Rückfluß gekocht. Das beim Abkühlen abgeschiedene Salz wird aus Ethanol umkristallisiert (Ausbeute 94 %).

### 2,5-Dibromhydrochinon-bis(ω-mercapto-1-alkyl)-ether:

30 mmol aus Ethanol umkristallisiertes Bis-thiuroniumsalz werden mit 300 mmol KOH in 100 ml Wasser eine Stunde gekocht, wobei das Salz vollständig gelöst wird. Unter Eis-Innenkühlung säuert man mit 5 n Salzsäure an und saugt das ausgefällte Produkt ab (Stickstoffatmosphäre). Umkristallisation aus Ethanol liefert feine Plättchen, leicht löslich in Chloroform und Benzol (Ausbeute 80 %).

### Cyclisierung zu den Dithia-cyclophanen.

In eine Lösung von 12 mmol des 2,5-Dibromhydrochinon-bis(ω-mercapto-1-alkyl)]-ethers und 24 mmol CuCl₂2H₂O in 4 l Dioxan und 100 ml Wasser, die sich in einem 5l-Kolben mit Intensivkühler und Eintauchfritte befindet, leitet man 12 h lang einen mäßigen Luftstrom ein. Nach kurzer Zeit fallen farblose Flocken aus, die abfiltriert werden. Nach Filtration und Zusatz von Fe(II)SO₄ wird unter vermindertem Druck bei 30° C auf 100 ml eingeengt. Die durch 100 ml Wasser ausgefällten Flocken extrahiert man mit Ethanol im Heißextraktor und engt die Extraktionslösung auf 50 ml ein. Beim Abkühlen kristallisiert das Produkt aus (Ausbeuten zwischen 2 % und 15 %).

### Beispiel 6:

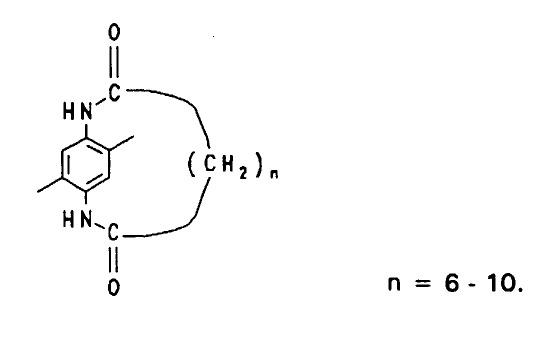

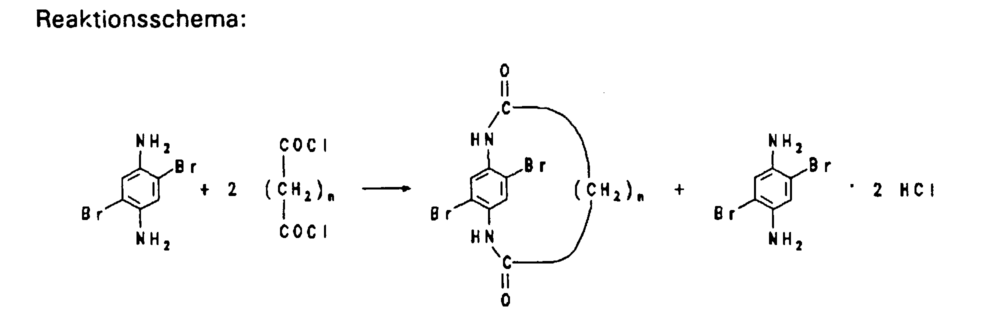

nach H. Stetter, L. Marx-Moll, Ber. 91 (1958) 677.

### Beispiel 7:

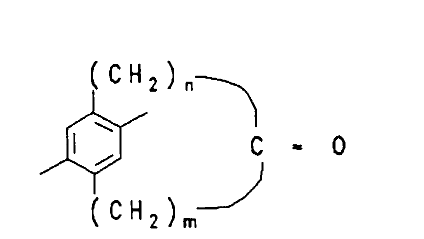

mit n = 0 - 10, m = 0 - 10 und n + m = 6 - 14 .
nach E. Forneau, P. M. Baranger, Bull. Soc. Chim. France 49 (1931) 1161 oder R. Huisgen, Ann. Chem. 586 (1954) 52 (für Verbindungen mit n = 0).

### Beispiel 8:

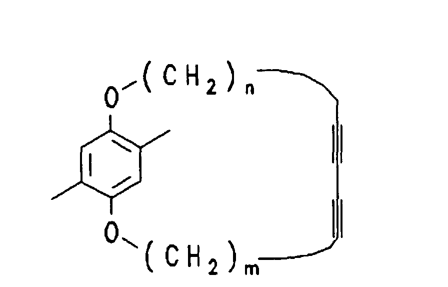

mit n = 1 - 10, m = 1 - 10 und n + m = 6 - 14 .
nach T. Inone, T. Kaneda, S. Mitsumi, Tetrahedron Lett. (1974) 2969.

### Beispiel 9:

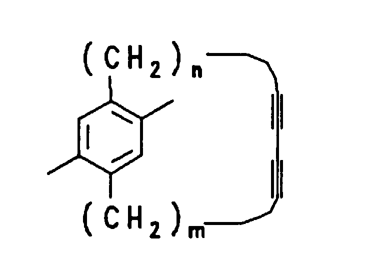

mit n = 1 - 10, m = 1 - 10 und n + m = 6 - 14 .
nach T. Inone, T. Kaneda, S. Mitsumi, Tetrahedron Lett. (1974) 2969.

### Beispiel 10:

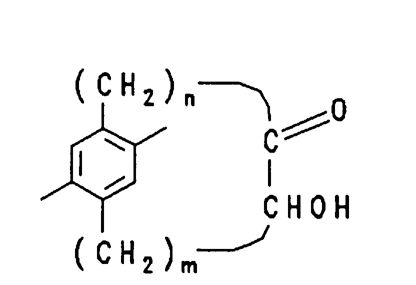

mit n = 1 - 20, m = 1 - 10 und n + m = 6 - 14
nach R. Kelly, D.M. McDonald, K. Wiesner, Nature 166 (1950) 225, bzw. K. Wiesner, Can. J. Research 28B (1950) 561;

### Beispiel 11:

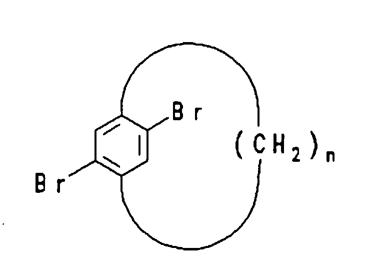

mit n = 8 - 16
nach D.J. Cram, H.U. Daeniker, J. Am. Chem. Soc. 76 (1954) 2743.

Weitere Synthesen für geeignete Cyclophaneinheiten zum Aufbau der erfindungsgemäßen Polymerstrukturen sind z.B. beschrieben in B.H. Smith, "Bridged Aromatic Compounds", Academic Press N.Y. 1964 und dort zitierter Literatur.

### Beispiel 12

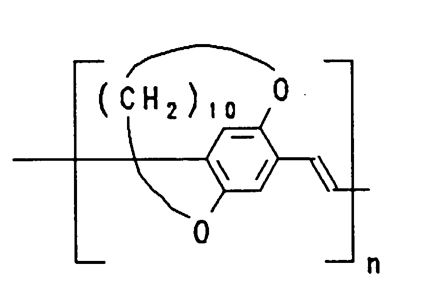

Ein 200 ml Autoklav wird mit 14.6 mmol (5.932 g) 15,17-Dibrom-2,13-dioxabicyclo[12.2.2]-14,16,17-octadecatrien (hergestellt analog Beispiel 3), 32.1 mmol (3.249 g) Triethylamin, 0.15 mmol (32.7 mg) Palladium(II)acetat, 0.87 mmol (0.266 g) Tri-o-tolylphosphin, 100 ml DMF und einem Rührfisch beladen. Der Autoklav wird entgast und anschließend mit 16 mmol (0.45 g) Ethen gefüllt. Die Mischung wird nun für 48 h auf 100°C erhitzt. Nach Abkühlen der Mischung wird das Polymer durch Zugabe von Methanol ausgefällt, im Vakuum getrocknet und schließlich mit 200 ml Chloroform in einer Soxhlet-Apparatur extrahiert. Der chloroformlösliche Anteil wird nun durch Zugabe von Methanol erneut ausgefällt. Beide Teile (chloroformlöslicher und unlöslicher Teil) werden 24 h bei 100°C vakuumgetrocknet.
Mₙ: 2000 M_{w}: 3000 (gemäß GPC)
¹H-NMR-Spektrum (200 MHz in CDCl₃): δ in ppm: 7,33 (2H), 7,21 (2H), 4,28 (4H), 1,19 (16H)
¹³C-NMR-Spektrum (50 MHz in CDCl₃): δ in ppm: 151.76, 123.61, 70.9, 29.96, 28.58, 28.38, 28.02, 27.67, 26.68, 24.65

Alle Angaben beziehen sich auf den in Chloroform löslichen Anteil des ataktischen Polymers.

## Patentansprüche

1. Ansateilstrukturen enthaltende konjugierte Polymere, dadurch gekennzeichnet, daß sie aromatische Gruppen enthalten und daß benachbarte aromatische Gruppen so miteinander verbunden sind, daß ein Ringatom einer aromatischen Gruppe direkt mit einem Ringatom der anderen aromatischen Gruppe verknüpft ist und etwaige weitere Verknüpfungen dieser beiden aromatischen Gruppen nur über eine Brücke möglich sind, die mindestens ein vierbindiges Kohlenstoffatom und/oder Heteroatom enthält.

2. Ansateilstrukturen enthaltende konjugierte Polymere gemäß Anspruch 1, gekennzeichnet durch eine oder mehrere Ansateilstrukturen der Formel (Ia) bis (Ig), 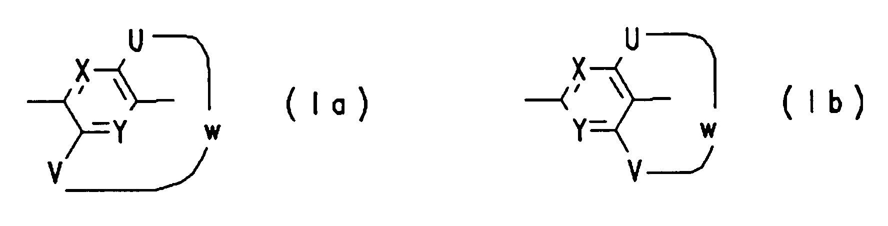 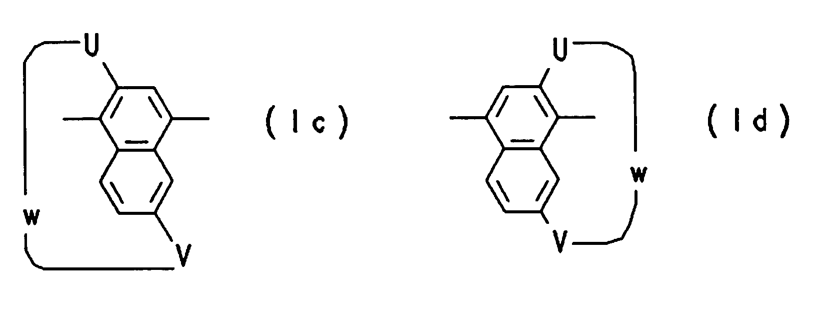 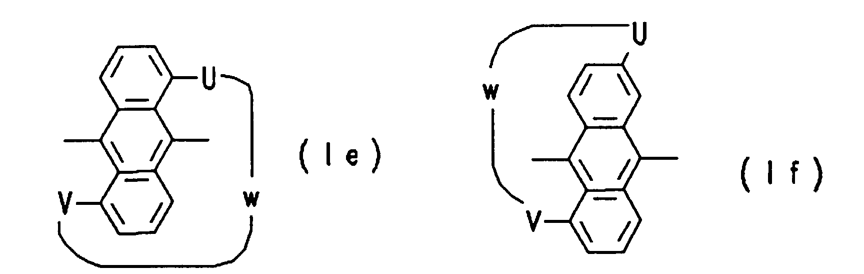 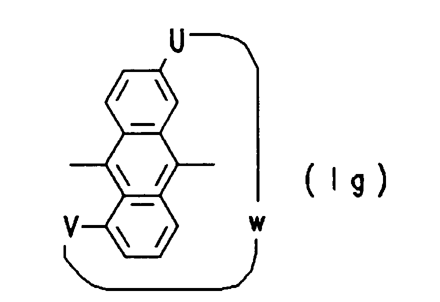 wobei die Symbole und Indizes folgende Bedeutungen haben:
X,Y =CR¹-, =N-;
U,V -O-, -S-, -NR¹-, -CR¹R²-;
R¹,R² H, Alkyl, Alkoxy mit jeweils 1 bis 22 Kohlenstoffatomen, CN, Halogen, Aryl, Aryloxy, mit jeweils 6 bis 10 Kohlenstoffatomen;
W -(CH₂)_{q}-, -(CH₂)ₙ-Z-(CH₂)ₘ-;
Z -CO-, -C≡C-C≡C-, -NHCO-, -S-(CH₂)ₚ-S-, -NH-, -CO(CH₂)ₚCO-, -OCO(CH₂)ₚCOO-, -NHCO(CH₂)ₚCONH-, -NH(CH₂)ₚNH-, -O(CH₂)ₚO-, -O-, 1,4-Phenylen, -S-, -SO₂-(CH₂)ₚ-SO₂-, -SO₂-, -CO-CHOH-;
n,m,p 0, 1, 2, 20;
q 5 .. 20.

3. Ansateilstrukturen enthaltende konjugierte Polymere gemäß Anspruch 2, gekennzeichnet durch eine oder mehrere Ansateilstrukturen aus der Gruppe: 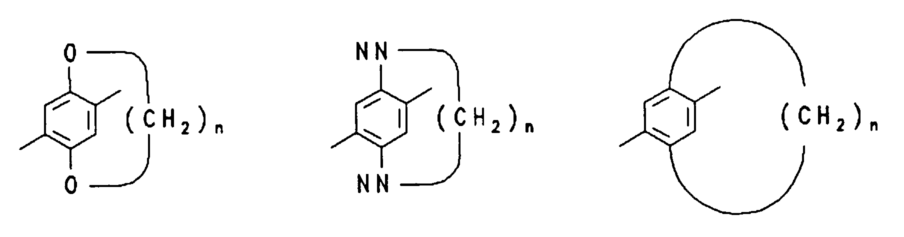 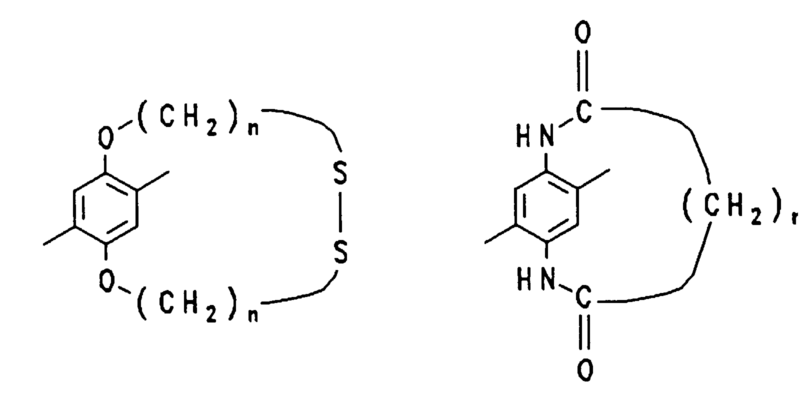 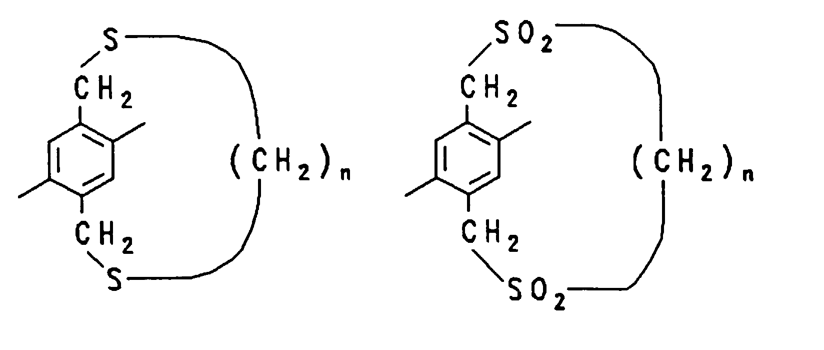 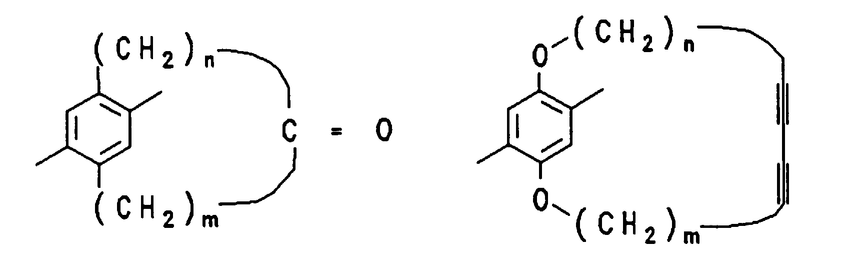 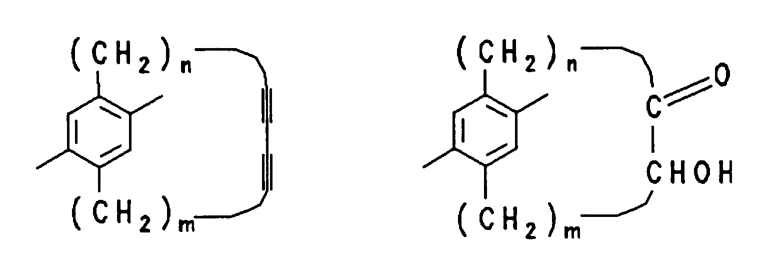 wobei n, m jeweils 0 bis 20 sind und n+m 4 bis 20 ist.

4. Ansateilstrukturen enthaltende konjugierte Polymere gemäß einem oder mehreren der Ansprüche 1 bis 3, gekennzeichnet durch die Formel (II) und/oder (III),
-[Cₘ₁-Dₘ₂]ₘ₃- (II) 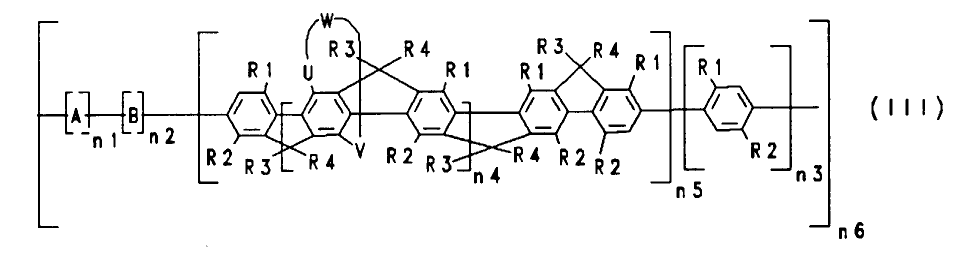
wobei die Symbole und Indizes folgende Bedeutungen haben:
A, B, C sind gleich oder verschiedene Bausteine der Formel (la) bis (Ig)
D 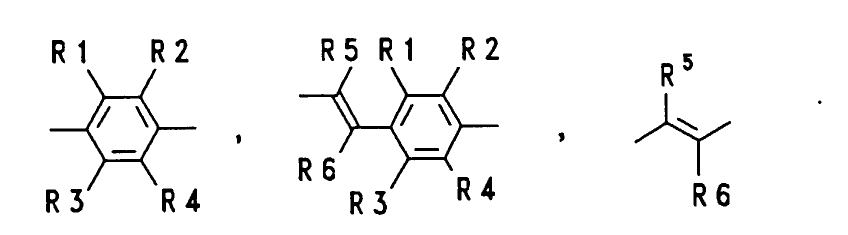
m1,m2 0, 1 bis 20;
m3 1 bis 2000;
U,V -O-, -S-, -NR¹-, -CR¹R²-;
W -(CH₂)_{q}-, -(CH₂)ₙ-Z-(CH₂)ₘ-;
Z -CO-, -C≡C-C≡C-, -NHCO-, -S-(CH₂)ₚ-S-, -NH-, -CO(CH₂)ₚCO-, -OCO(CH₂)ₚCOO-, -NHCO(CH₂)ₚCONH-, -NH(CH₂)ₚNH-, -O(CH₂)ₚO-, -O-, 1,4-Phenylen, -S-, -SO₂(CH₂)ₚ-SO₂-, -SO₂-, -CO-CHOH-;
n,m,p 0, 1, 2, 20;
q 5 .. 20;
R1,R2,R3,R4,R5,R6 H, Alkyl, Alkoxy, mit jeweils 1 bis 22 Kohlenstoffatomen, Aryl, Aryloxy, mit jeweils 6 bis 10 Kohlenstoffatomen, CN, Halogen;
n1,n2,n3 0,1 ... 20;
n4,n5 0,1 ... 2000 und
n6 1 ... 2000.

5. Elektrolumineszenzvorrichtung, enthaltend ein oder mehrere Ansateilstrukturen enthaltende konjugierte Polymere gemäß einem oder mehreren der Ansprüche 1 bis 4.

6. Verwendung von Ansateilstrukturen enthaltenden konjugierten Polymeren gemäß einem oder mehreren der Ansprüche 1 bis 4 in Elektrolumineszenzvorrichtungen.

## Claims

1. A conjugated polymer containing ansa substructures, which contains aromatic groups and in which adjacent aromatic groups are connected to one another in such a way that one ring atom of one aromatic group is directly linked to one ring atom of the other aromatic group and any further linkages of these two aromatic groups are possible only via a bridge containing at least one tetravalent carbon atom and/or heteroatom.

2. A conjugated polymer containing ansa substructures as claimed in claim 1, which comprises one or more ansa substructures of the formulae (Ia) to (Ig), 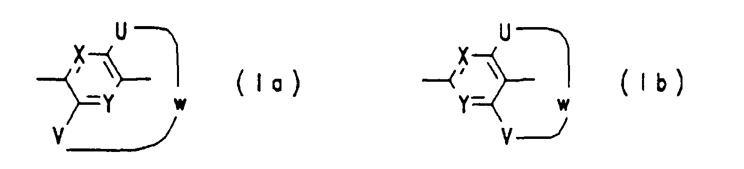 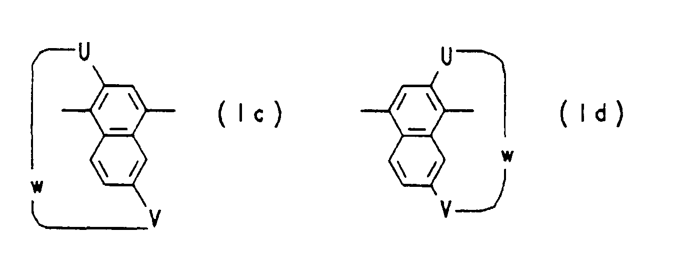 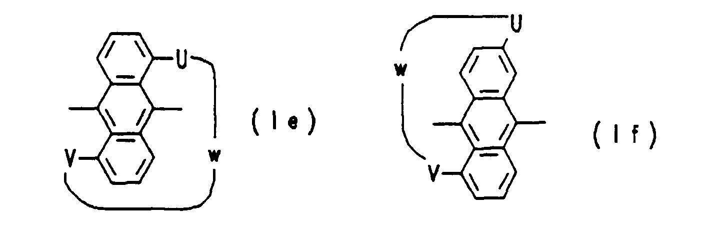 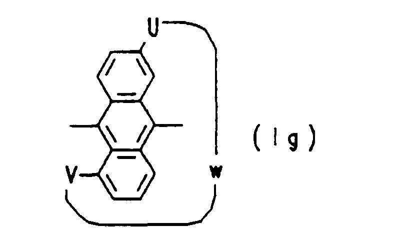 where the symbols and indices have the following meanings:
X,Y are =CR¹-, =N-;
U,V are -O-, -S-, -NR¹-, -CR¹R²-;
R¹,R² are H, alkyl, alkoxy each having from 1 to 22 carbon atoms, CN, halogen, aryl, aryloxy, each having from 6 to 10 carbon atoms;
W is -(CH₂)_{q}-, -(CH₂)ₙ-Z-(CH₂)ₘ-;
Z is -CO-, -C≡C-C≡C-, -NHCO-, -S-(CH₂)ₚ-S-, -NH-, -CO(CH₂)ₚCO-, -OCO(CH₂)ₚCOO-, -NHCO(CH₂)ₚCONH-, -NH(CH₂)ₚNH-, -O(CH₂)ₚO-, -O-, 1,4-phenylene, -S-, -SO₂-(CH₂)ₚ-SO₂-, -SO₂-, -CO-CHOH-;
n,m,p are 0, 1, 2, .., 20;
q is 5 .. 20.

3. A conjugated polymer containing ansa substructures as claimed in claim 2, which comprises one or more ansa substructures selected from the group consisting of: 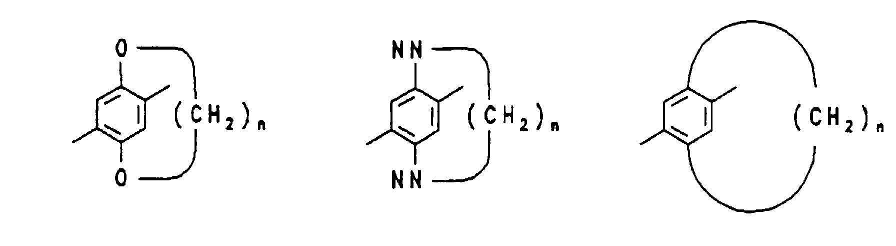 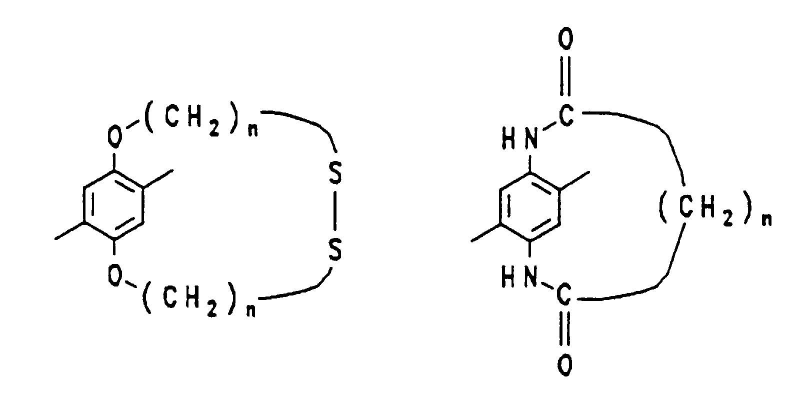 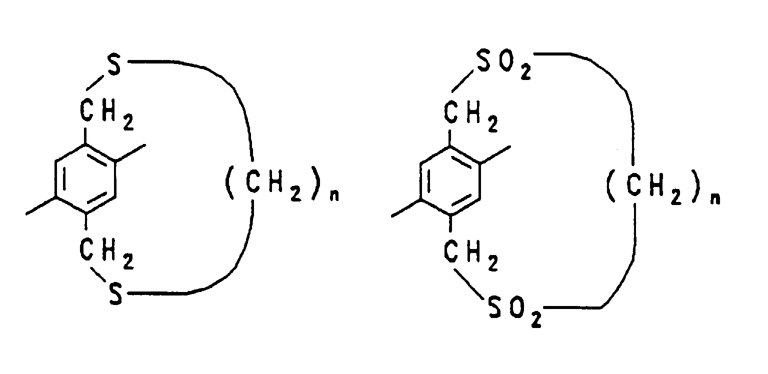 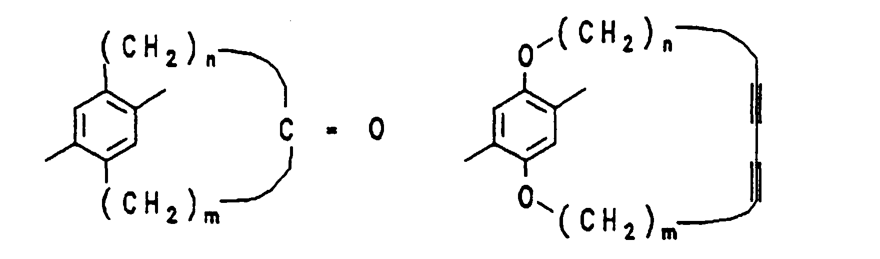 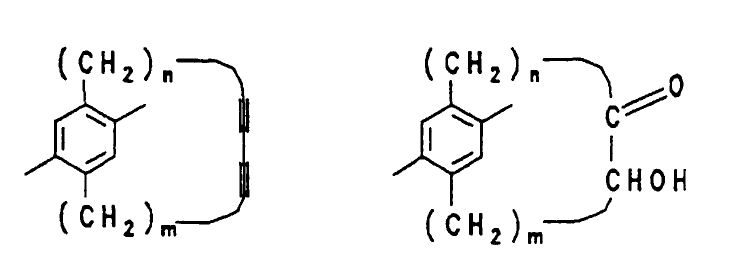 where n, m are each from 0 to 20 and n + m is from 4 to 20.

4. A conjugated polymer containing ansa substructures as claimed in one or more of claims 1 to 3, which has the formula (II) and/or (III),
-[Cₘ₁-Dₘ₂]ₘ₃- (II) 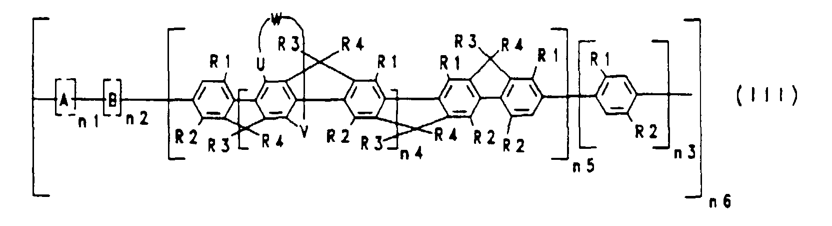
where the symbols and indices have the following meanings:
A,B,C identically or differently are building blocks of the formulae (Ia) to (Ig)
D is 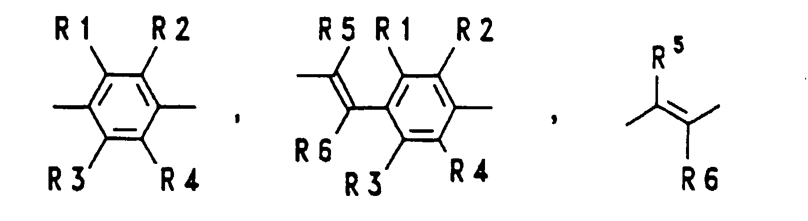
m1,m2 are 0, 1 to 20;
m3 is 1 to 2000;
U,V are -O-, -S-, -NR¹-, -CR¹R²-;
W is -(CH₂)_{q}-, -(CH₂)ₙ-Z-(CH₂)ₘ-;
Z is -CO-, -C≡C-C≡C-, -NHCO-, -S-(CH₂)ₚ-S-, -NH-, -CO(CH₂)ₚCO-, -OCO(CH₂)ₚCOO-, -NHCO (CH₂)ₚCONH-, -NH(CH₂)ₚNH-, -O(CH₂)ₚO-, -O-, 1,4-phenylene, -S-, -SO₂ (CH₂)ₚ-SO₂-, -SO₂-, -CO-CHOH-;
n,m,p are 0, 1, 2, .., 20;
q is 5 .. 20;
R1,R2,R3,R4,R5,R6 are H, alkyl, alkoxy, each having from 1 to 22 carbon atoms, aryl, aryloxy, each having from 6 to 10 carbon atoms, CN, halogen;
n1,n2,n3 are 0, 1 ... 20;
n4,n5 are 0, 1 ... 2000 and
n6 is 1 ... 2000.

5. An electroluminescence device comprising conjugated polymers containing one or more ansa substructures as claimed in one or more of claims 1 to 4.

6. Use of conjugated polymers containing ansa substructures as claimed in one or more of claims 1 to 4 in electroluminescence devices.

## Revendications

1. Polymères conjugués comportant des structures partielles ansa, caractérisés qu'ils comportent des groupes aromatiques et en ce que les groupes aromatiques adjacents sont liés l'un à l'autre de façon telle qu'un atome de cycle d'un groupe aromatique soit lié directement à un atome de cycle de l'autre groupe aromatique et que d'autres couplages éventuels de ces deux groupes aromatiques ne puissent être réalisés que par l'intermédiaire d'un pont, lequel contient au moins un atome de carbone tétravalent et/ou hétéroatome.

2. Polymères conjugués comportant des structures partielles ansa selon la revendication 1, caractérisés par une ou plusieurs structures partielles ansa de formule (la) à (Ig) 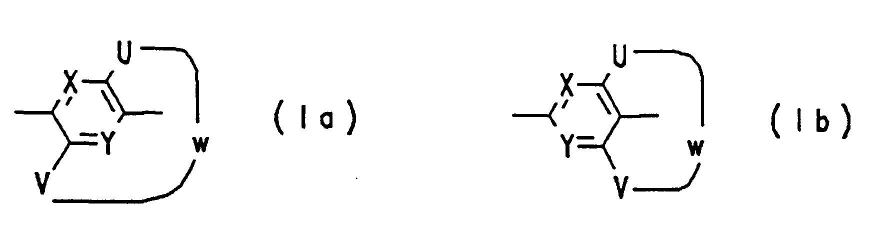 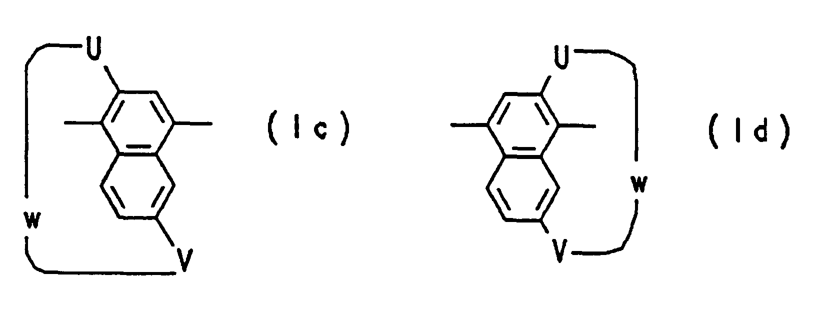 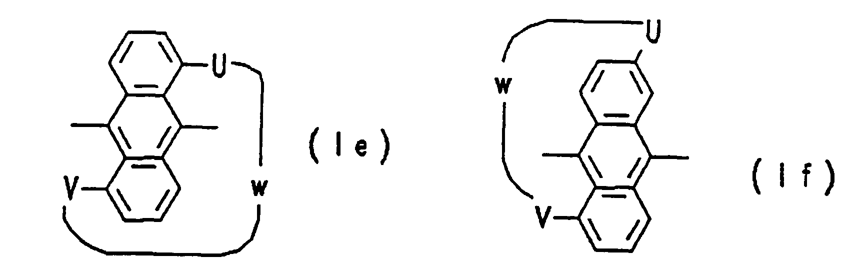 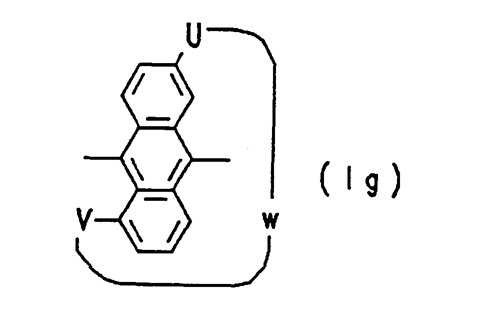 les symboles et les indices possédant les significations suivantes :
X, Y =CR¹-, =N- ;
U, V -O-, -S-, -NR¹-, -CR¹R²- ;
R¹, R² H, des groupes alkyle, alkoxy chacun avec 1 à 22 atomes de carbone, CN, halogène, aryle, aryloxy chacun avec 6 à 10 atomes de carbone ;
W -(CH₂)_{q}-, -(CH₂)ₙ-Z-(CH₂)ₘ- ;
Z -CO-, -C≡C-C≡C-, -NHCO-, -S-(CH₂)ₚ-S-, -NH-, -CO(CH₂)ₚ-CO-, -OCO(CH₂)ₚCOO-, -NHCO(CH₂)ₚCONH-, -NH(CH₂)ₚNH-, -O(CH₂)ₚO-, -O-, 1,4-phénylène, -S-, -SO₂-(CH₂)ₚ-SO₂-, -SO₂-, -CO-CHOH- ;
n, m, p valent 0, 1, 2, ..., 20 ;
q vaut 5 ... 20.

3. Polymères conjugués comportant des structures partielles ansa selon la revendication 2, caractérisés par une ou plusieurs structures partielles ansa 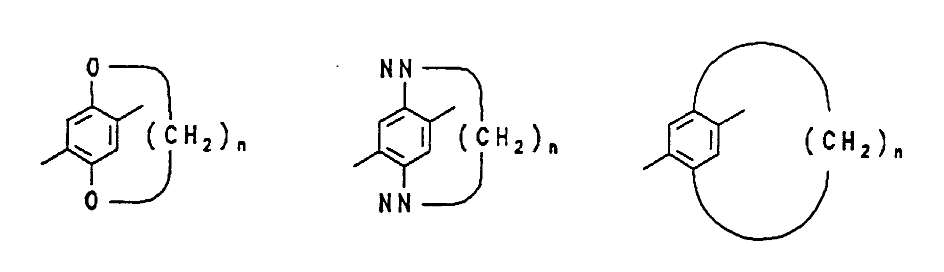 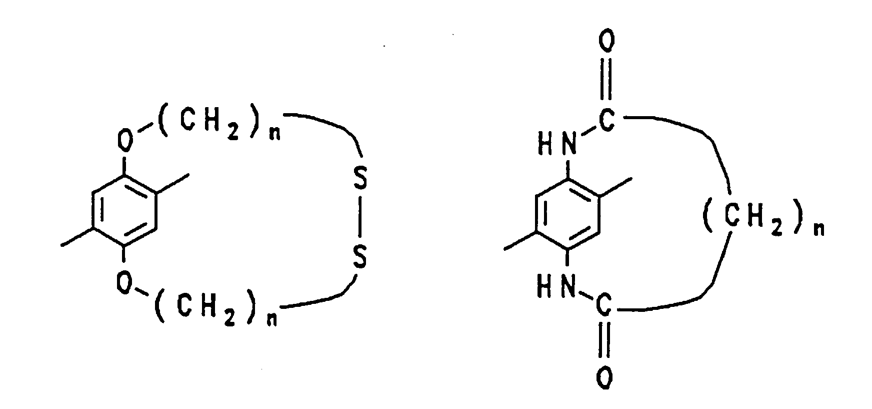 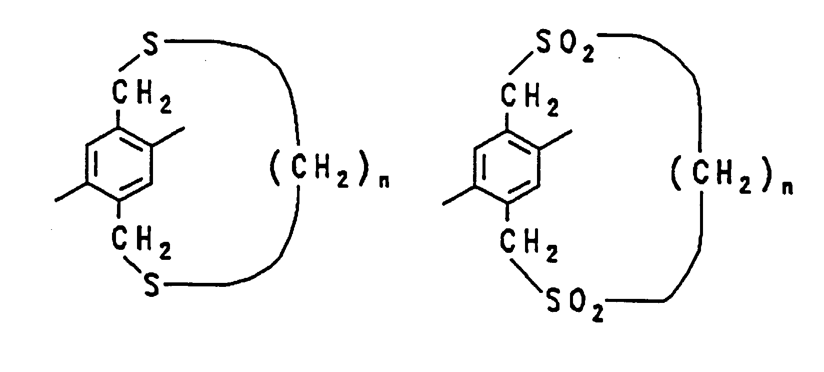 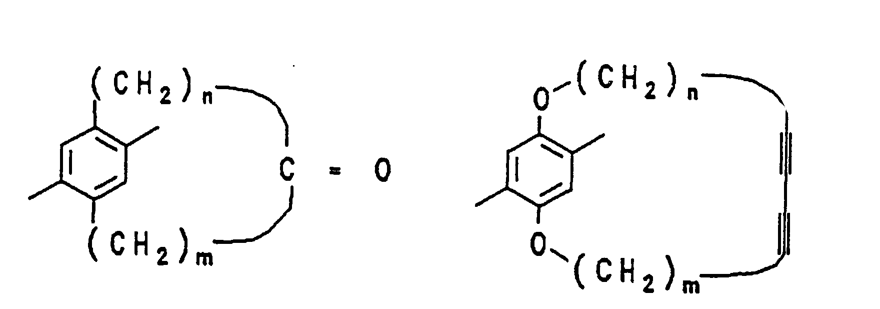 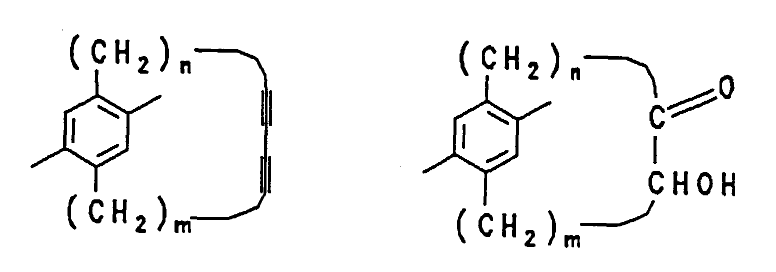 n, m à chaque fois allant de 0 à 20 et n + m allant de 4 à 20.

4. Polymères conjugués comportant des structures partielles ansa selon une ou plusieurs des revendications 1 à 3, caractérisés par par la formule (Il) et/ou (III),
-[Cₘ₁-Dₘ₂]ₘ₃- (II) 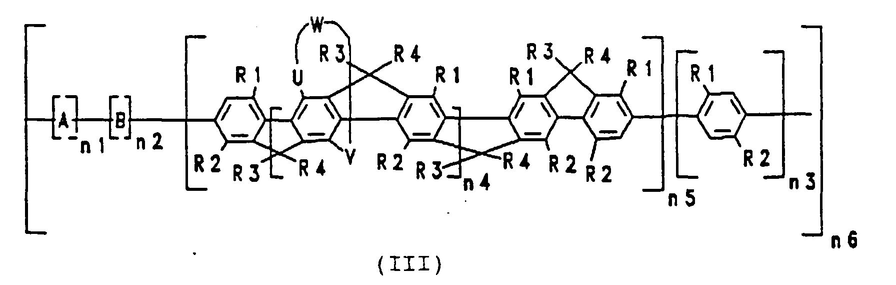
les symboles et les indices possédant les significations suivantes :
A, B, C sont des éléments constitutifs identiques ou différents de formule (la) à (Ig)
D représente 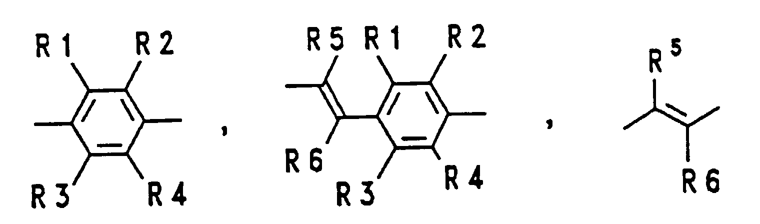
m1, m2 valent 0, de 1 à 20 ;
m3 de 1 à 2000 ;
U, V -O-, -S-, -NR¹-, -CR¹R²- ;
W -(CH₂)_{q}-, -(CH₂)ₙ-Z-(CH₂)ₘ- ;
Z -CO-, -C≡C-C≡C-, -NHCO-, -S-(CH₂)ₚ-S-, -NH-, -CO(CH₂)ₚ-CO-, -OCO(CH₂)ₚCOO-, -NHCO(CH₂)ₚCONH-, -NH(CH₂)ₚNH-, -O(CH₂)ₚO-, -O-, 1,4-phénylène, -S-, -SO₂-(CH₂)ₚ-SO₂-, -SO₂-, -CO-CHOH- ;
n, m, p valent 0, 1, 2, ..., 20 ;
q vaut 5 ... 20.
R1, R2, R3, R4, R5, R6 représentent des atomes d'hydrogène, des groupes alkyle, alkoxy chacun avec 1 à 22 atomes de carbone, aryle, aryloxy chacun avec 6 à 10 atomes de carbones, CN, halogène ;
n1, n2, n3 valent 0, 1 ... 20 ;
n4, n5 valent 0, 1 ... 2000 et
n6 vaut 1 ... 2000.

5. Dispositif électroluminescnet comportant des polymères conjugués contenant une ou plusieurs partielles structures ansa selon une ou plusieurs des revendications 1 à 4.

6. Utilisation de polymères conjugués contenant des structures partielles ansa selon une ou plusieurs des revendications 1 à 4 dans des dispositifs électroluminescents.
